# EUROPÄISCHE PATENTANMELDUNG

(11) **EP 0 605 362 A1**
(43) Veröffentlichungstag der Anmeldung: **06.07.1994**
(21) Anmeldenummer: 93810894.1
(22) Anmeldetag: 20.12.1993
(51) Int. Cl.: C04B 28/02, C04B 40/06

(54) **Baumaterial**

(30) Priorität: 30.12.1992 CH 3991/92
(71) Anmelder: Büchel, Arnold, CH-8610 Uster (CH)
(72) Erfinder: Büchel, Arnold, CH-8610 Uster (CH)
(74) Vertreter: Breiter, Heinz

(57) **Zusammenfassung**

Das schütt- und/oder fliessfähige Baumaterial besteht aus einem mit Wasser aufschlämmbaren Gemisch eines Grundmaterials aus Steinwolle, in Form von Stopfwolle oder als Feingranulat, einem anorganischen, körnigen Material und einem eingemischten oder separaten, leicht einmischbaren hydraulischen Bindemittel. Weiter können anorganische Schaumkörner und/oder organische Abfallstoffe, z.B. gehacktes Stroh, beigemischt werden.

Das Baumaterial dient der Herstellung von Putzen, insbesondere von Grundputzen, Ueberzügen, Auffüllungen oder Formkörpern.

## Beschreibung

Die Erfindung bezieht sich auf ein schütt- und/oder fliessfähiges Baumaterial für die Herstellung von Putzen, insbesondere Grundputzen, Ueberzügen, Auffüllungen oder Formkörpern.

Rohe Böden, Wände und Decken, aber auch Pfeile, Säulen, Bögen und Stürze werden meist mit Ueberzügen und/oder Putzen versehen. Dies erfolgt insbesondere aus drei Gründen:
- Dem Bauwerk bzw. dessen Bewohnern soll Schutz gegen Verwitterung, Wärme und Kälte, Lärmimmissionen und sonstige schädigende Einwirkungen verliehen werden.
- Das im rohen Zustand oft unansehnliche Bauwerk soll verschönert werden.
- Unebenheiten sollen ausgeglichen werden.

Dem Fachmann sind Putze, Ueberzüge und Beschichtungen verschiedenster Art bekannt, beispielsweise das Aufziehen mehrerer übereinander liegender Putzschichten oder das Verlegen von Platten.

Die verlegten Platten sind als einfache oder komplizierte Formkörper ausgebildet. Auf einer Baustelle werden jedoch auch Formkörper verwendet, welche nicht als Beläge oder Verkleidungen verlegt sind, beispielsweise Treppenstufen oder Fenstersimse.

In der CH-A5 675874 wird ein Verfahren zur Herstellung von Baumaterialien für Beläge, Verkleidungen und Putze beschrieben, welche zur Aufrechterhaltung der Atmungsfähigkeit eine poröse Struktur aufweisen. Trotz der preisgünstigen Herstellung dieser porendurchsetzten Baumaterialien ist die Umweltbilanz positiv, weil das Verfahren den Einsatz von weitgehend natürlichen Ausgangsmaterialien erlaubt. Es beruht im wesentlichen darauf, dass ein mit Wasser aufgeschlämmtes, feinkörniges Grundmaterial aus bei weniger als 1000°C gebrannten Tonziegeln mit einem hydraulischen Bindemittel gemischt, die feuchte Masse in eine Form gegeben oder schichtförmig auf eine Unterlage aufgetragen und durch Austrocknen abgebunden wird.

Ausgehend von seiner obenstehenden Patentschrift hat sich der Erfinder die Aufgabe gestellt, ein Baumaterial der eingangs genannten Art zu schaffen, das - bei weiterhin positiver Umweltbilanz - die Bearbeitung von Gebäuden und Gebäudeteilen, die Beschichtung oder die Herstellung von Formkörpern mit weiter verbesserten mechanischen, wärme- und schalldämmenden Eigenschaften erlaubt. Durch weitgehenden Einsatz von natürlichen Abfallmaterialien soll, bei Schonung der natürlichen Ressourcen, auch der Wirtschaftlichkeit Rechnung getragen werden.

Die Aufgabe wird erfindungsgemäss dadurch gelöst, dass das Baumaterial aus einem mit Wasser aufschlämmbaren Gemisch eines Grundmaterials aus Steinwolle, einem anorganischen, körnigen Material und einem eingemischten oder separaten, leicht einmischbaren hydraulischen Bindemittel besteht. Spezielle und weiterbildende Ausführungsformen der Erfindung sind Gegenstand von abhängigen Patentansprüchen.

Der Begriff Steinwolle umfasst alle anorganischen Materialien, welche zur Herstellung von isolierender Wolle geeignet sind.

Kann das Gemisch aus Steinwolle und anorganischem, körnigem Material mit einem gewöhnlichen Betonmischer auf der Baustelle nicht genügend homogen hergestellt werden, so muss es vorher mit einem aktiven Intensivmischer innig durchmischt werden. Bei einem Trockengemisch kann das Bindemittel gleichzeitig eingemischt werden. Dieses schüttfähige Festkörpergemisch kann mit minimalen Kosten transportiert und auf der Baustelle mit Wasser, je nach der erforderlichen Konsistenz, zum gebrauchsfertigen Baumaterial angefeuchtet oder aufgeschlämmt werden.

Liegt das anorganische, körnige Material als Schlämme vor, wird im aktiven Intensivmischer nur die Steinwolle zugegeben und das homogene Gemisch feucht transportiert. Mit einem normalen Betonmischer kann auf der Baustelle das Bindemittel eingemischt werden.

Steinwolle wird vorzugsweise in Form von Stopfwolle oder als Feingranulat verwendet, beide werden auf dem Markt gebrauchsfertig angeboten. Stopfwolle ist flockenartig ausgebildet, mit verhältnismässig langen Fasern. Feingranulat dagegen hat nur verhältnismässig kurze Fasern, es sieht im wesentlichen staubförmig aus.

Als anorganisches körniges Material wird nach einer ersten Variante gebrochener Ton eingesetzt, der vorzugsweise aus unterhalb etwa 1000°C, beispielsweise bei etwa 850°C, gebrannten Ziegeln besteht. Falls die Atmungsfähigkeit des Baumaterials keine Rolle spielt, kann an Stelle von oder zusätzlich zum Ton Sand aller üblichen Gesteine eingemischt sein, auch Perlit oder Lecca. Die Wahl des anorganischen, körnigen Materials richtet sich in erster Linie nach der Verwendung. Für Grundputze in Wohnräumen wird Ton bevorzugt, weil dieser 100% atmend ist. In Feuchträumen dagegen wird reiner Sand eingesetzt.

Die Korngrösse des anorganischen Materials richtet sich nach der Verwendung. Bei Auffüllungen kann die Korngrösse bis zu 8 mm oder mehr betragen, bei Formkörpern oder glatten Grundputzen ohne Deckputz dagegen sind Korngrössen bis etwa 3 mm üblich.

Oekonomisch und ökologisch ist der Einsatz von Schlämmen aus anorganischem, körnigem Material von besonderer Bedeutung. Diese Schlämmen bestehen aus Abfallmaterial aus gewerblichen oder industriellen Prozessen. Das feinkörnige Material einer Korngrösse von höchstens etwa 0,5 mm, meist unter 0,2 mm, setzt sich und kann vom überstehenden Wasser getrennt werden. Derartige Schlämmen fallen beispielsweise beim Schneiden oder Schleifen von Tonziegeln, Steinen oder Steinplatten, aber auch in grosstechnischen Prozessen wie der Gewinnung von Tonerde aus Bauxit an. Gemeinsam ist allen anfallenden Schlämmen, dass sie nicht ohne weiteres in eine Grube geführt werden können und daher schwer entsorgbar sind. Wie oben erwähnt, werden die Schlämmen in der Regel mit Steinwolle intensiv gemischt und feucht transportiert. Die Schlämmen können jedoch auch getrocknet und vor dem Mischen gemahlen werden, beispielsweise in einer Kugelmühle.

Als hydraulisches Bindemittel wird bevorzugt Zement, Kalk oder eine Mischung davon eingesetzt. Das mit Wasser angefeuchtete oder aufgeschlämmte Bindemittel erhärtet selbständig und ist nach dem Abbinden wasserbeständig. Als Zement ist grauer oder weisser Zement geeignet. Weisser Zement ist nicht nur ein qualitativ hochwertiges Bindemittel, er wird auch aus ökologischen Gründen bevorzugt. Ueberdies entsteht bei Verwendung von weissem Zement ein Baumaterial hellerer Farbe, was in bestimmten Fällen erwünscht ist.

Bei einem höheren Anteil von Zement entsteht eine härtere Schicht oder ein härterer Formkörper. Das Einmischen von Zement, Kalk oder der Anteil von Zement in einer Mischung von beiden ist anwendungsbezogen. Je feinkörniger das eingemischte anorganische Material ist, desto höher ist tendenzmässig der Anteil von zugegebenem Bindemittel. Beim Auftragen einer feuchten Putzmasse an eine Gebäudewand ist der Kalkanteil höher als bei einem Grundputz bzw. einem Ueberzug auf einem Boden.

Bei einem Bindemittel aus zwei Komponenten sind Zement und Kalk vorzugsweise in einem Volumenverhältnis von etwa 1:1 bis 1:6 eingemischt. Für einen Boden-Grundputz, auch Ueberzug genannt, wird bevorzugt ein zementreiches Bindemittel eingemischt, beispielsweise ein Teil Zement mit einem Teil Kalk. Für einen Wand-Grundputz dagegen wird bevorzugt ein höherer Kalkgehalt eingemischt, dort beträgt das Volumenverhältnis beispielsweise 1:3.

Das hydraulische Bindemittel insgesamt, als Ein- oder Zweistoffkomponente, ist in volumenmässig anteilsgleichem bis eher geringem Anteil eingemischt, das Verhältnis der Komponenten Steinwolle, körniges Material und Bindemittel liegt vorzugsweise im Bereich von etwa 1:1:1 bis 3:3:1. Neben diesem Mischungsverhältnis spielt für die praktische Verwendung das zugegebene Wasser eine Rolle, welches der Fachmann nach seinem Fachwissen zugibt. Je nach zugegebener Wassermenge bleibt das Baumaterial schüttfähig, wird schütt- und fliessfähig oder mit zunehmender Wasserzugabe ausschliesslich fliessfähig, ohne Bildung eines Schüttkegels.

Zusätzlich zum anorganischen, körnigen Material oder dieses teilweise ersetzend können anorganische Schaumkörner beigemischt werden. Diese Schaumkörner bestehen bevorzugt aus Schaumglas, jedoch auch aus porösem Vulkangestein und/oder Schaumkeramik. Schaumkörner bestehen zweckmässig aus gemahlenen Materialien und sind daher scharfkantig. Beim intensiven Mischen zerschneiden sie die Steinwollenfasern, was durchaus erwünscht sein kann. Schaumglas, welches beispielsweise aus Altglas hergestellt wird, indem dieses geschäumt und nachher zertrümmert wird, nimmt praktisch kein Wasser auf.

Dank ihrer porösen Struktur vermögen die eingemischten Schaummaterialien eine unerwartet hohe thermische und akustische Dämpfungswirkung zu entfalten, welche die entsprechenden Eigenschaften der mit dem Baumaterial hergestellten Putze, Ueberzügen, Auffüllmaterialien oder Formkörper weiter erhöhen.

Als weitere fakultative Kompenenten zur Erhöhung der Porosität des Baumaterials eignen sich, einzeln oder kumuliert eingesetzt, beispielsweise:
- Sägemehl als Abfallprodukt der Holzindustrie, wenn eine weiche, gut isolierende Verkleidung hergestellt werden soll,
- Papierschnitzel gemahlenes oder zerfasertes Altpapier, gehacktes Stroh,
- andere natürliche Fasern auf organischer Basis, wie z.B. Flachsfasern, Kokosfasern oder Seegras,
- Glaswolle.

Eine vorteilhafte Mischung umfasst bezüglich des Volumens einen Teil feinkörnigen Ton, einen Teil Steinwolle und einen Teil gehacktes Stroh. Auf zwei bis drei Teile dieser Mischung wird ein Teil Bindemittel zugegeben.

Aus dekorativen Gründen kann zum Baumaterial auch Ziegelschrott hinzugefügt werden, welcher vorzugsweise eine Korngrösse von 0,1 bis 3 mm hat. Die Farbe des Ziegelschrotts kann derjenigen des anorganischen, körnigen Materials entsprechen, bevorzugt wird jedoch wenigstens eine andere, insbesondere auch eine Kontrast-Farbe, gewählt. Dank des Ziegelschrotts können durch Schleifen aus mit dem Baumaterial hergestellten Flächen Strukturen herausgearbeitet werden, welche neben der durch das Grundmaterial verliehenen Basisfarbe durch die beigemischten Ziegelschrottkörner geprägt sind.

Dank der Steinwolle ist das erfindungsgemässe Baumaterial ohne Verzögerungsmittel sehr gut verarbeitbar, es bindet langsam ab, aber fliesst bei entsprechend geringem Wassergehalt als Wandputz eingesetzt doch nicht, weil das Baumaterial insgesamt leicht und faserig ist.

Steinwolle nimmt viel Wasser auf und gibt beim Abbinden das Wasser ab. Damit kann, allenfalls im Zusammenwirken mit weiteren geeigneten Zusätzen, die Bildung von Schwundrissen verhindert werden. Fliessfähig aufgeschlämmte Baumaterialien haben ein gutes Füllvermögen.

Das mit Wasser angefeuchtete oder aufgeschlämmte erfindungsgemässe Baumaterial ist dank seiner leichten Verarbeitbarkeit und seiner guten Eigenschaften auf breiter Basis verwendbar. Als Grundputz lässt es sich sehr glatt streichen und ist deshalb auch als Denkmalputz geeignet. Ein Deckputz ist nicht nötig. Die feuchte Masse kann in einer Schicht wenn nötig bis etwa 5 - 6 cm dick aufgetragen werden, beispielsweise als Isolationsputz auf Bollensteinen. Ein Isolationsputz hat vorzugsweise Ton als anorganisches, körniges Material, zweckmässig mit weiteren Zusätzen, wie Schaumglaskörner und/oder Sägemehl. Selbst beim Austrocknen eines derartig aufgetragenen Putzes konnten keine Schwundrisse festgestellt werden.

Auf übliche Fassaden kann, ggf. nach dem Auftragen eines Zementansprutzes, ein Grundputz von 1 bis 2,5 cm Dicke aufgetragen werden. Der als Ueberzug auf Rohböden aufgetragene Grundputz enthält - wie bereits erwähnt - zum Erreichen einer härteren Schicht mehr Zement als ein Wandputz. In Garagen und Kellerräumen bildet dieser Ueberzug in der Regel die fertige Oberfläche. Er kann, insbesondere in bewohnten Räumen, mit Plättchen belegt oder einer Fliesstonschicht überzogen werden. Aus der ausgetrockneten Fliesstonschicht können Fugen ausgefräst und mit Fugenmaterial gefüllt werden, wodurch ein "Plättchenboden" entsteht.

Eine feuchte Masse aus erfindungsgemässem Material kann als Füllmaterial mehrere Zentimeter dick in Balkenlager oder Riegelbauwerke gestrichen werden. Dabei kann das anorganische Material verhältnismässig grobkörnig sein, beispielsweise bis zu einer Korngrösse von etwa 8 mm. Weiter enthält das Füllmaterial bevorzugt isolierende Zusätze wie Schaumglaskörner und/oder Sägemehl.

In dem Fachmann bekannter Weise können bei Materialübergängen mechanische Hilfsmittel wie Drahtgeflechte und dgl. verwendet werden.

Das feuchte, erfindungsgemässe Material kann auf praktisch alle üblichen Unterlagen aufgetragen werden, insbesondere nach einem zementreicheren Ansprutz. Das Auftragen auf Gips erfolgt zweckmässig nach einem Voranstrich mit einer Haftbrücke.

Beim Auftragen auf Holz ist in der Regel ein Drahtgeflecht notwendig. Weil Holz immer arbeitet, ist eine Einlage aus wenigstens einem Wellpapier zur Erzeugung einer schwimmenden Schicht zweckmässig. Eine Einlage aus wenigstens je einer Lage von luftdurchlässigem, saugfähigem Wellpapier, Drahtgeflecht und Armierungsnetz, welche miteinander verbunden sind, ist besonders vorteilhaft (CH-Patentgesuch 02898/91).

Grundputze an Gebäudewänden können entsprechend der EP-A1 0438799 auch hinterlüftet aufgetragen werden, allerdings auch in einer einzigen Schicht.

Zu verlegende Plättchen oder andere Formkörper aus Ton, Gips, Holz, Beton oder einem anderen Baumaterial können mit einer beispielsweise 1-3 cm dicken, fliessfähigen Schicht aus dem erfindungsgemässen Baumaterial überzogen werden. Rissbildungen können z.B. verhindert werden, indem vorerst eine verhältnismässig grobkörnige Schicht mit dem Haftmaterial aufgetragen wird, nach dem Abbinden eine zweite, feinkörnigere Schicht. Schliesslich wird eine feinkörnige dritte Schicht aufgetragen und diese allenfalls geschliffen.

Die Herstellung von Formkörpern kann manuell erfolgen, insbesondere wenn diese komplizierte Formen haben, wie z.B. Blumenschalen. Die Fertigung gepresster und/oder grossformatiger Formkörper kann auch industriell erfolgen.

## Patentansprüche

1. Schütt- und/oder fliessfähiges Baumaterial für die Herstellung von Putzen, insbesondere Grundputzen, Ueberzügen, Auffüllungen oder Formkörpern,
dadurch gekennzeichnet, dass
es aus einem mit Wasser aufschlämmbaren Gemisch eines Grundmaterials aus Steinwolle, einem anorganischen, körnigen Material und einem eingemischten oder separaten, leicht einmischbaren hydraulischen Bindemittel besteht.

2. Baumaterial nach Anspruch 1, dadurch gekennzeichnet, dass die Steinwolle in Form von Stopfwolle oder als Feingranulat eingemischt ist.

3. Baumaterial nach Anspruch 1 oder 2, dadurch gekennzeichnet, dass als anorganisches, körniges Material Ton, vorzugsweise aus unterhalb etwa 1000°C gebrannten Ziegeln, und/oder Sand eingemischt ist.

4. Baumaterial nach Anspruch 3, dadurch gekennzeichnet, dass das körnige Material wenigstens teilweise ein Abfallmaterial aus gewerblichen oder industriellen Prozessen ist, vorzugsweise mit einer Korngrösse von höchstens etwa 0,5 mm.

5. Baumaterial nach Anspruch 4, dadurch gekennzeichnet, dass Steinwolle mit als Schlämme anfallendem körnigem Material gemischt ist.

6. Baumaterial nach einem der Ansprüche 1 bis 5, dadurch gekennzeichnet, dass als hydraulisches Bindemittel Zement und/oder Kalk eingemischt ist.

7. Baumaterial nach Anspruch 6, dadurch gekennzeichnet, dass bei einem Zweikomponenten-Bindemittel Zement und Kalk in einem Volumenverhältnis von etwa 1:1 bis 1:6 eingemischt sind.

8. Baumaterial nach einem der Ansprüche 1 bis 7, dadurch gekennzeichnet, dass die Komponenten Steinwolle, körniges Material und Bindemittel im Verhältnis von etwa 1:1:1 bis 3:3:1 gemischt sind.

9. Baumaterial nach einem der Ansprüche 1 bis 8, dadurch gekennzeichnet, dass das zusätzlich eingemischte oder das anorganische, körnige Material teilweise ersetzende anorganische Schaumkörner, auch aus gemahlenen Abfallmaterialien hergestellt, beigemischt sind.

10. Baumaterialien nach einem der Ansprüche 1 bis 9, dadurch gekennzeichnet, dass Holzsägemehl, gehacktes Stroh, Papierschnitzel und/oder gemahlenes oder zerfasertes Altpapier beigemischt sind.
